# NEUE EUROPÄISCHE PATENTSCHRIFT

(11) **EP 3 495 847 B2**
(45) Veröffentlichungstag und Bekanntmachung des Hinweises auf die Entscheidung über den Einspruch: **17.07.2024**
(45) Hinweis auf die Patenterteilung: 11.05.2022
(21) Anmeldenummer: 18211001.5
(22) Anmeldetag: 07.12.2018
(51) Int. Cl.: G01S 19/20, G07C 5/08, B60W 50/02, B60W 50/14, B60R 16/023, G07B 15/06

(54) **TACHOGRAFENANORDNUNG UND VERFAHREN ZUM BETREIBEN EINER TACHOGRAFENANORDNUNG**
TACHOGRAPH ASSEMBLY AND METHOD FOR OPERATING SAME
AGENCEMENT DE TACHYGRAPHE ET PROCÉDÉ DE FONCTIONNEMENT D'UN AGENCEMENT DE TACHYGRAPHE

(30) Priorität: 08.12.2017 DE 102017222320
(43) Veröffentlichungstag der Anmeldung: 12.06.2019
(73) Patentinhaber: Continental Automotive Technologies GmbH, 30175 Hannover (DE)
(72) Erfinder: Dohmen, Ralf, 78050 Villingen-Schwenningen (DE); Werner, Thomas, 79848 Bonndorf (DE)
(74) Vertreter: Continental Corporation

(56) Entgegenhaltungen:
- EP-A1- 3 174 015
- TOLL COLLECT GMBH: "Bedienungsanleitung Toll Collect Fahrzeuggerät", 15 March 2012 (2012-03-15), XP055580264, Retrieved from the Internet <URL:https://web.archive.org/web/20190411132837/https://www.svg-nordrhein.de/fileadmin/BBG-SVG-Daten/Dokumente/Dokumente_SVG/Maut_D/automatisch_buchen/obu_bda_d.pdf#close> [retrieved on 20190411]
- EIDGENÖSSISCHE ZOLLVERWALTUNG: "Bedienungsanleitung Erfassungsgerät emotCH", 1 September 2012 (2012-09-01), XP055580266, Retrieved from the Internet <URL:https://web.archive.org/web/20190411133347/http://www.emotachsimulation.ch/pdf/Bedienungsanleitung_OBU_DE.pdf#close> [retrieved on 20190411]

## Beschreibung

Die Erfindung betrifft eine Tachografenanordnung und ein Verfahren zum Betreiben einer Tachografenanordnung.

Die "Bedienungsanleitung Toll Collect Fahrzeuggerät" der Toll Collect GmbH beschreibt verschiedene Funktionen eines automatischen Mauterhebungssystems. Auch die "Bedienungsanleitung Erfassungsgerät emotach" der Eidgenössischen Zollverwaltung beschreibt verschiedene Funktionen eines Erfassungseräts für die Aufzeichnung der Fahrleistung und relevanten Daten zur Erhebung der leistungsabhängigen Schwerverkehrsabgabe.

Die Druckschrift EP 3 174 015 A1 offenbart, zur Erkennung von fehlerhaften Zustandsvariablen einer zur Mauterhebung dienlichen Fahrzeugeinrichtung, Eingangsdaten aus denen durch die Fahrzeugeinrichtung Ausgangsdaten in Form eines Wertes der Zustandsvariablen erzeugt werden, in einem Ereignisprotokoll und die Ausgangsdaten in einem Statusprotokoll abzuspeichern, um dann ausgehend von zu prüfenden Eingangsdaten mittels eines Regelwerkes in dem Statusprotokoll nach zu erwartenden und/oder verbotenen Ausgangsdaten zu suchen oder ausgehend von zu prüfenden Ausgangsdaten mittels eines Regelwerkes in dem Ereignisprotokoll nach zu erwartenden und/oder verbotenen Eingangsdaten zu suchen, wobei eine Fehlermeldung ausgegeben wird, wenn die eine oder die andere Suche nach zu erwartenden Daten erfolglos ist und/oder die eine oder andere Suche nach verbotenen Daten erfolgreich ist.

Tachografen, oft auch Fahrtenschreiber genannt, sind Kontrollgeräte, die zur Überwachung verschiedener Fahrzeugbetriebsparameter in Kraftfahrzeugen installiert werden. Die zu überwachenden Fahrzeugbetriebsparameter werden meist durch verschiedenste Arten von Sensoren erfasst und vom Tachograf gespeichert und weiterverarbeitet. Fahrzeugbetriebsparameter können beispielsweise Fahrtzeiten, eine zurückgelegte Strecke oder während der zurückgelegten Strecke gefahrene Durchschnitts- und Maximalgeschwindigkeiten sein. Auch bestimmte Ereignisse, wie beispielsweise Lenkzeitunterbrechungen, können vom Tachografen erfasst und gespeichert werden. Die aufgezeichneten und gespeicherten Daten können anschließend ausgelesen werden.

Früher fanden meist mechanische Tachografen Verwendung, welche jedoch vermehrt durch elektronische Tachografen mit digitaler Datenspeicherung ersetzt werden. Derartige Tachografen werden häufig auch als digitale Fahrtenschreiber bezeichnet. In vielen Ländern sind heutzutage digitale Fahrtenschreiber in neu zugelassenen Fahrzeugen, insbesondere in Fahrzeugen zum Gütertransport oder auch in Bussen, vorgeschrieben. Digitale Tachografen können neben den grundsätzlichen Funktionen, wie beispielsweise dem Erfassen und Aufzeichnen der Fahrtstrecke und der Fahrtzeit, häufig auch zusätzliche Funktionen ausführen, wie beispielsweise das Berechnen von Lenk- und Ruhezeiten.

Um zu verhindern, dass die vom Tachografen aufgezeichneten Daten manipuliert werden, können der Tachograf und die aufgezeichneten Daten regelmäßig oder stichprobenartig überprüft werden. Eine solche Überprüfung kann beispielsweise mittels Straßenkontrollen durchgeführt werden, bei welchen die Daten des Tachografen per Fernkommunikation ausgelesen und auf Plausibilität überprüft werden. Dabei können Fehler in den aufgezeichneten Daten beispielsweise auch dann auftreten, wenn keine gewollte Manipulation vorliegt, sondern beispielsweise die Positionsbestimmung des Tachografen im vorangegangenen Zeitraum fehlerhaft war, da die entsprechende Funktion durch ungewollte Störquellen unterbrochen wurde.

Aufgabe der Erfindung ist es, eine Tachografenanordnung und ein Verfahren zum Betreiben einer Tachografenanordnung bereitzustellen, bei welchen Störungen in der Funktion des Tachografen durch Störquellen detektiert werden.

Diese Aufgabe wird durch eine Tachografenanordnung, nämlich eine Anordnung mit einem Tachografen und einem externen Gerät, gemäß Anspruch 1 und ein Verfahren gemäß Anspruch 5 gelöst. Ausgestaltungen und Weiterbildungen des Erfindungsgedankens sind Gegenstand von abhängigen Ansprüchen.

Eine Anordnung weist einen Tachografen und eine Ausleseeinheit auf. Der Tachograf weist eine Tachografeneinheit, die eine DSRC-Einheit (DSRC = Dedicated Short Range Communication) ist, auf, die dazu ausgebildet ist, eine drahtlose Verbindung zu der Ausleseeinheit herzustellen, Signale von der Ausleseeinheit zu empfangen und Daten an die Ausleseeinheit zu übertragen. Der Tachograf weist eine Kontrolleinheit auf, die dazu ausgebildet ist zu detektieren, ob mittels der DSRC-Einheit Signale empfangen werden, wenigstens einen Parameter im Zusammenhang mit den empfangenen Signalen zu überprüfen, eine Störung zu erkennen und eine Warnung auszugeben, wenn eine Störung erkannt wurde. Eine Störung wird erkannt, wenn die DSRC-Einheit Signale empfängt und der wenigstens eine Parameter vorgegebene Voraussetzungen erfüllt.

Zu bestimmten Zeitpunkten kann das Empfangen von Daten mit der Tachografeneinheit gewünscht sein. Zu anderen Zeitpunkten kann jedoch eine Störung vorliegen, wenn nicht gewünschte Signale empfangen werden.

Der wenigstens eine Parameter kann aufweisen: eine Dauer, für die Signale empfangen werden, eine Dauer, für die keine Signale empfangen werden, eine aktuelle oder vergangene Position der Anordnung, die Art eines Kommunikationsprotokolls der empfangenen Signale, eine Information darüber, ob sich die Anordnung in Bewegung befindet, und/oder eine Information darüber, ob sich die Anordnung schneller als eine vorgegebene Minimalgeschwindigkeit bewegt.

Indem zusätzlich wenigstens ein Parameter betrachtet wird, wird eine Störung nicht in jedem Fall erkannt, wenn entweder keine oder zu wenig Signale empfangen werden oder wenn ungewollt Signale empfangen werden.

Eine Störung kann beispielsweise detektiert werden, wenn sich die Anordnung in Bewegung befindet und die DSRC-Einheit für eine Dauer Signale empfängt, welche länger ist als eine Minimaldauer. Die Minimaldauer kann beispielsweise 30 Sekunden, 60 Sekunden oder 3 Minuten betragen. Im Rahmen einer Kontrolle empfängt die DSRC-Einheit meist nur für einen kurzen Zeitraum Daten von der Ausleseeinheit. Passiert die DSRC-Einheit beispielsweise eine elektronische Mautstation, können ebenfalls kurzzeitig Daten empfangen werden, was jedoch meist keine Störung darstellt. Somit kann der Empfang von Daten über einen längeren Zeitraum bei sich bewegender Tachografeneinheit einen Hinweis auf eine Störung darstellen.

Die Tachografeneinheit kann beispielsweise auch eine GNSS-Einheit sein und das externe Gerät kann wenigstens einen Satelliten aufweisen. Die GNSS-Einheit ist dazu ausgebildet, Satellitensignale von wenigstens einem Satelliten zu empfangen und anhand der Satellitensignale eine Position der Anordnung zu bestimmen.

Eine Störung kann in diesem Fall dann erkannt werden, wenn sich die Anordnung in Bewegung befindet und für eine Dauer, welche länger ist als eine Minimaldauer, zu wenig Signale empfängt. Wenn für einen zu langen Zeitraum keine Signale oder zu wenig Signale empfangen werden, kann die GNSS-Einheit keine Positionsbestimmung durchführen. Die Minimaldauer kann dabei 10 Sekunden, 20 Sekunden, 30 Sekunden oder 60 Sekunden betragen. Kurzzeitige Unterbrechungen der Signale sind somit erlaubt. Durch verschiedenste Umstände, z.B. Durchfahren eines Tunnels, können die Signale kurzzeitig unterbrochen werden, ohne dass eine Störung vorliegt.

Ein Verfahren zum Betreiben eines Tachografen mit einer Tachografeneinheit weist auf: Detektieren, ob mittels der Tachografeneinheit, die eine DSRC-Einheit ist, Signale von einer Ausleseeinheit empfangen werden; Überprüfen wenigstens eines Parameters im Zusammenhang mit den empfangenen Signalen; Erkennen einer Störung; und Ausgeben einer Warnung, wenn eine Störung erkannt wurde. Eine Störung wird dabei erkannt, wenn die DSRC-Einheit Signale empfängt und der wenigstens eine Parameter vorgegebene Voraussetzungen erfüllt.

Das Ausgeben einer Warnung kann wenigstens eines aufweisen von Erzeugen einer visuellen Warnung, Erzeugen einer akustischen Warnung, Erzeugen einer haptischen Warnung, Erzeugen eines Diagnostic Trouble Code (DTC) und Bereitstellen der Warnung auf einem elektronischen Fahrzeugdatenbus.

Es kann somit ein Nutzer über die Störung informiert werden, damit dieser beispielsweise die Störung beheben kann oder manuelle Eingaben am Tachografen vornehmen kann. Alternativ oder zusätzlich kann eine Information über die Störung gespeichert werden, so dass diese zu einem späteren Zeitpunkt ausgelesen werden kann. Eine Information über die Störung kann auch anderen Einheiten oder Steuergeräten bereitgestellt werden.

Der Tachograf kann beispielsweise in einem Fahrzeug angeordnet sein.

Die Erfindung wird nachfolgend anhand der Figuren der Zeichnung näher erläutert, wobei gleiche oder ähnliche Elemente mit denselben Bezugszeichen versehen sind. Es zeigt:
- Figur 1: in einem Blockschaltbild eine beispielhafte Tachografenanordnung,
- Figur 2: in einem Blockschaltbild eine weitere beispielhafte Tachografenanordnung,
- Figur 3: in einem Ablaufdiagramm schematisch das Prinzip eines erfindungsgemäßen Verfahrens,
- Figur 4: in einem Ablaufdiagramm schematisch das Prinzip eines weiteren erfindungsgemäßen Verfahrens, und
- Figur 5: in einem Ablaufdiagramm schematisch das Prinzip eines weiteren erfindungsgemäßen Verfahrens.

Fahrtenschreiber oder Tachografen sind für den Einbau in Kraftfahrzeugen bestimmte Geräte zum vollautomatischen oder halbautomatischen Anzeigen, Aufzeichnen, Ausdrucken, Speichern und Ausgeben von Angaben über die Fahrten des Fahrzeugs, einschließlich seiner Fahrgeschwindigkeit sowie Angaben über bestimmte Tätigkeitszeiten des oder der Fahrer des Fahrzeugs. Das Fahrzeug kann beispielsweise ein LKW oder ein Bus sein. Insbesondere Fahrer von LKWs dürfen bestimmte Lenkzeiten nicht überschreiten und müssen im Anschluss an ihre Lenkzeiten vorgegebene Ruhezeiten einhalten.

Daher müssen Tachografen beispielsweise genaue und zuverlässige Daten betreffend den Fahrern, die Tätigkeit des Fahrers und das Fahrzeug aufzeichnen. Beispielsweise werden die zurückgelegte Wegstrecke und Geschwindigkeit des Fahrzeugs, die Identität des Fahrers, die Tätigkeit des Fahrers, Ereignisse und Fehler aufgezeichnet. Zudem können beispielsweise auch Kontroll-, Kalibrierungs- und Tachografen-Reparaturdaten aufgezeichnet werden. Dabei müssen die Integrität und der Ursprung der von Fahrzeugeinheiten und Bewegungssensoren aufgezeichneten und abgerufenen Daten gewährleistet sein.

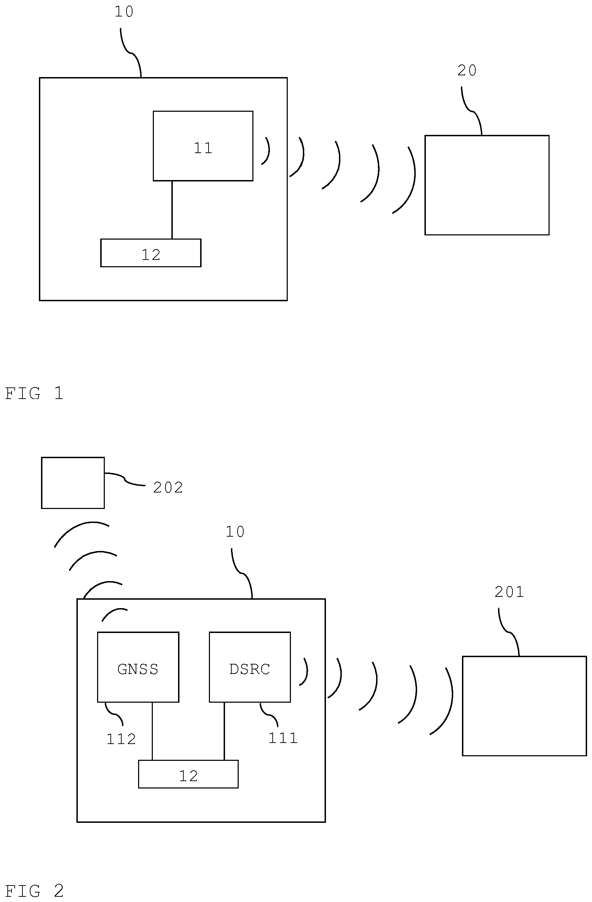

Verschiedene Komponenten des Tachografen können beispielsweise eine Funkverbindung zu externen Komponenten herstellen. Dies ist beispielhaft in Figur 1 dargestellt. Figur 1 zeigt eine Anordnung mit einem Tachografen 10. Der Tachograf 10 weist wenigstens eine Tachografeneinheit 11 auf. Über eine Funkverbindung kann die Tachografeneinheit 11 Daten mit einem externen Gerät 20 austauschen. Dabei kann eine einseitige Kommunikation oder eine zweiseitige Kommunikation stattfinden. Bei einer einseitigen Kommunikation kann die Tachografeneinheit 11 beispielsweise nur entweder Daten empfangen oder nur Daten senden. Bei einer zweiseitigen Kommunikation können Daten sowohl gesendet als auch empfangen werden.

Wie in Figur 2 beispielhaft dargestellt, kann die Tachografeneinheit 11 beispielsweise eine DSRC-Einheit 111 (DSRC = Dedicated Short Range Communication) sein. Über die DSRC-Einheit 111 können beispielsweise Daten aus dem Tachografen 10 ausgelesen werden. Das externe Gerät 20 kann in diesem Fall beispielsweise eine Ausleseeinheit 201 sein, die dazu ausgebildet ist, die Tachografendaten auszulesen. Daten können beispielsweise eine aktuelle sowie vergangene Positionen des Tachografen 10, bzw. eines Fahrzeugs in welchem der Tachograf 10 angeordnet ist, eine zurückgelegte Strecke, eine Geschwindigkeit auf der zurückgelegten Strecke, Angaben zum Fahrer des Fahrzeugs, Angaben zur Aktivität des Fahrers oder Angaben zu Lenkzeiten und Ruhezeiten des Fahrers betreffen. Die Daten können im Tachograf 10 gespeichert und zu einem beliebigen späteren Zeitpunkt von der Ausleseeinheit 201 ausgelesen werden.

Eine DSRC-Einheit 111 sendet und empfängt Daten in der Regel in einem Frequenzband im Bereich zwischen 5795 - 5805 MHz. Dabei ist problematisch, dass die Übertragung gestört werden kann. Beispielsweise wird für die elektronische Mauterhebung in Deutschland dasselbe Frequenzband zwischen 5795 und 5805 MHz verwendet. Für die elektronische Mauterhebung ist in einem Fahrzeug eine entsprechende Einheit angebracht. Auf mautpflichtigen Straßen sind an bestimmten Stellen elektronische Mautstellen angeordnet, welche registrieren, wenn ein Fahrzeug die Mautstelle passiert. Dadurch kann die zurückgelegte Strecke und die entsprechend für die Strecke zu zahlende Maut berechnet werden. Passiert ein LKW mit einem Tachografen 10, der eine DSRC-Einheit 111 aufweist, eine elektronische Mautstelle, können durch die von der Mautstelle ausgesendeten Signale Störungen in der Übertragung (z.B. durch Signalinterferenzen) zwischen der DSRC-Einheit 111 und der Ausleseeinheit 201 auftreten. Auch durch andere Geräte und Komponenten, wie beispielsweise WLAN-Access Points (drahtlose Zugangspunkte für ein Wireless Local Area Network), kann die Funkverbindung zwischen der DSRC-Einheit 111 und der Ausleseeinheit 201 gestört werden.

Die Funktion einer DSRC-Einheit 111 ist grundsätzlich dann gestört, wenn andere Signale als die einer Ausleseeinheit 201 in dem selben Frequenzband von der DSRC-Einheit 111 empfangen werden.

Die Positionsbestimmung eines Tachografen 10 erfolgt häufig über GNSS. Ein globales Navigationssatellitensystem (Global Navigation Satellite System, GNSS) ist ein System zur Positionsbestimmung und Navigation auf der Erde und in der Luft durch den Empfang der Signale von Navigationssatelliten und Pseudoliten. Hierzu gehören beispielsweise GPS (Global Positioning System), GLONASS (Global Navigation Satellite System), Galileo und Beidou. Dabei teilen Satelliten 202 der GNSS-Satellitenkonstellation über Funkcodes ihre genaue Position und Uhrzeit mit. Zur Positionsbestimmung muss eine GNSS-Einheit 112 im Empfänger (hier: im Tachograf 10) die Signale von mindestens drei Satelliten gleichzeitig empfangen. Die GNSS-Einheit 112 berechnet anhand des Empfangszeitpunktes die Signallaufzeiten und daraus mittels geeigneter Triangulationsoder Multilaterationsverfahren den Standpunkt des Tachografen 10.

Auch die von den Satelliten 202 ausgesendeten Signale, welche zur Positionsbestimmung benötigt werden, können jedoch durch Störquellen gestört werden. Bei gestörten Satellitensignalen kann eine ausreichend genaue Positionsbestimmung nicht mehr sichergestellt werden. Über die bestimmten Positionen können die zurückgelegte Strecke sowie die Geschwindigkeit des entsprechenden Fahrzeugs, in welchem der Tachograf 10 angeordnet ist, ermittelt werden. So können beispielsweise auch Geschwindigkeitsüberschreitungen festgestellt werden. Sind die Satellitensignale über einen längeren Zeitraum gestört, kann jedoch keine genaue Geschwindigkeitsbestimmung mehr erfolgen. Die im Tachograf 10 gespeicherten Daten können daher bei gestörten Satellitensignalen unvollständig oder fehlerhaft sein.

Sowohl bei einer Störung der Kommunikation der DSRC-Einheit 111, als auch bei einer Störung der Kommunikation der GNSS-Einheit 112 (Fehlerhafte Datenaufzeichnung) haben das Transportunternehmen und/oder der Fahrer des entsprechenden Fahrzeugs mit Konsequenzen zu rechnen. Eine DSRC-Kommunikation findet meist nur temporär statt. Beispielsweise können entsprechende Kontrollen durchgeführt werden, bei welchen über eine Ausleseeinheit 201 die aufgezeichneten Daten ausgelesen und auf Plausibilität überprüft werden. Hierfür können entsprechende Kontrollstationen eingerichtet werden, beispielsweise an Autobahnen. Die Ausleseeinheit 201 sendet ein entsprechendes Anfragesignal an die DSRC-Einheit 111, woraufhin diese die entsprechenden Daten an die Ausleseeinheit 201 sendet. Bei Aufenthalt im Bereich von Mautstellen können wie oben beschrieben Störungen auftreten. Beim Vorbeifahren eines Fahrzeugs an einer Mautstelle sind diese Störungen meist nur temporär und wirken sich nicht wesentlich auf die Funktion der DSRC-Einheit 111 aus, sofern eine Kontrolle nicht im Bereich einer Mautstelle stattfindet. Befindet sich ein Fahrzeug jedoch beispielsweise im Stau und aufgrund der verlangsamten Geschwindigkeit oder bei Stillstand für längere Zeit im Bereich einer elektronischen Mautstelle, kann die Funktion der DSRC-Einheit 111 für einen längeren Zeitraum gestört sein. Dies kann bei einer späteren Kontrolle beispielsweise als Manipulationsversuch fehlinterpretiert werden.

Während die DSRC-Einheit 111 in der Regel nur temporär Daten austauscht, muss die GNSS-Einheit 112 in der Regel permanent funktionsfähig sein. Insbesondere während der Fahrt des Fahrzeugs (Betriebszeit), muss die Position des Fahrzeugs permanent erfasst werden um die zurückgelegte Strecke und die gefahrene Geschwindigkeit nachvollziehen zu können. Daher ist es auch bei der GNSS-Einheit 112 wünschenswert, dass die Kommunikation mit externen Geräten 20 (z.B. Satelliten 202) nicht, oder wenigstens nicht für einen längeren Zeitraum (z.B. mehr als wenige Sekunden oder mehr als wenige Minuten) gestört wird.

Gemäß einem Beispiel der vorliegenden Erfindung weist der Tachograf 10 daher eine Kontrolleinheit 12 auf. Die Kontrolleinheit 12 kann, wie in Figur 1 beispielhaft dargestellt, mit der wenigstens einen Tachografeneinheit 11 verbunden sein. Wie in Figur 2 beispielhaft dargestellt, kann die Kontrolleinheit 11 beispielsweise mit einer DSRC-Einheit 111 und mit einer GNSS-Einheit 112 verbunden sein. Jegliche andere Tachografeneinheiten 11 können jedoch durch die Kontrolleinheit 12 überwacht werden. Die Kontrolleinheit 12 kann die Funktion der Tachografeneinheiten 11 überwachen. Ist die Funktion einer Tachografeneinheit 11 gestört, kann unter bestimmten Voraussetzungen eine Warnung generiert werden. Dadurch kann der Fahrer des Fahrzeugs beispielsweise darauf hingewiesen werden, dass eine Funktion des Tachografen 10 gestört ist. Der Fahrer kann dann entsprechende Maßnahmen einleiten, beispielsweise die Störquellen entfernen.

Eine Störung kann beispielsweise dann vorliegen, wenn die GNSS-Einheit entweder zu wenig Satellitensignale empfängt oder wenn die Qualität der empfangenen Satellitensignale nicht ausreichend ist (z.B. zu geringe Empfangsfeldstärke), um eine Positionsbestimmung durchzuführen. Kurzzeitige Schwankungen in der Anzahl der empfangenen Signale können dabei beispielsweise nicht als Störung angesehen werden. Beispielsweise können keine Satellitensignale empfangen werden, wenn das Fahrzeug einen Tunnel durchfährt. Dies stellt jedoch keine Störung im Sinne der Erfindung dar. Beim Durchfahren eines Tunnels können für einen bestimmten Zeitraum keine Satellitensignale empfangen werden. Sobald das Fahrzeug den Tunnel wieder verlässt, werden in der Regel wieder ausreichend Signale empfangen.

Befindet sich eine Störquelle in der Nähe des Tachografen, werden die Satellitensignale meist sehr unregelmäßig gestört. Das heißt, Zeitpunkte zu welchen ausreichend Signale empfangen werden und Zeitpunkte zu welchen nicht ausreichend Signale empfangen werden können sich in schneller Folge abwechseln. Eine Störung der GNSS-Einheit 112 kann somit beispielsweise dann erkannt werden, wenn die Anzahl empfangener Signale innerhalb kurzer Zeit sehr häufig und sehr stark schwankt. Auch kann eine Störung beispielsweise dann erkannt werden, wenn die Störung über einen längeren Zeitraum vorliegt. Wenn beispielsweise für mehr als 10 Sekunden, mehr als 20 Sekunden, mehr als 30 Sekunden oder mehr als 60 Sekunden keine Positionsbestimmung erfolgen kann, kann dies als Störung interpretiert werden.

Um eine mögliche Störung zu plausibilisieren, kann beispielsweise überprüft werden, ob sich das Fahrzeug in Bewegung befindet. Beispielsweise können auch dann für einen langen Zeitraum keine Satellitensignale empfangen werden, wenn das Fahrzeug in einem Tunnel im Stau steht. Wird also erkannt, dass die Signalqualität der empfangenen Signale nicht ausreichend ist, bzw. dass gar keine oder zu wenig Satellitensignale empfangen werden, und befindet sich das Fahrzeug nicht in Bewegung oder bewegt sich mit einer Geschwindigkeit die geringer ist als eine Mindestgeschwindigkeit, dann wird dies beispielsweise nicht als Störung erkannt. Wird die Signalqualität als nicht ausreichend erkannt, bzw. werden zu wenig Signale empfangen und bewegt sich das Fahrzeug mit einer Geschwindigkeit die größer oder gleich einer Mindestgeschwindigkeit ist, dann kann beispielsweise eine Störung detektiert werden.

Beispielsweise ist es auch möglich, anstatt die Dauer der Unterbrechung zu betrachten, anhand von Kartendaten zu plausibilisieren, ob eine Störung vorliegt. Beispielsweise können entsprechende Karten im Tachograf 10 hinterlegt sein oder ein Navigationsgerät im Fahrzeug kann entsprechende Kartendaten an den Tachograf 10 liefern. Anhand der zuletzt bestimmten Position kann durch einen Abgleich mit den Kartendaten beispielsweise erkannt werden, dass sich das Fahrzeug in einen Tunnel hinein bewegt. Auch dann kann eine Unterbrechung der Satellitensignale beispielsweise nicht als Störung erkannt werden.

Störungen der Satellitensignale können jedoch nicht nur durch Tunnels hervorgerufen werden, sondern beispielsweise auch durch Bäume, welche die Signale abschatten, oder eine dichte Wolkendecke. Daher kann ein Abgleich mit Kartendaten nur in manchen Fällen helfen, eine Störung auszuschließen. Wie bereits oben beschrieben können jedoch sehr häufige Änderungen der Anzahl der empfangenen Signale und/oder der Empfangsfeldstärke ein Hinweis auf eine Störung sein.

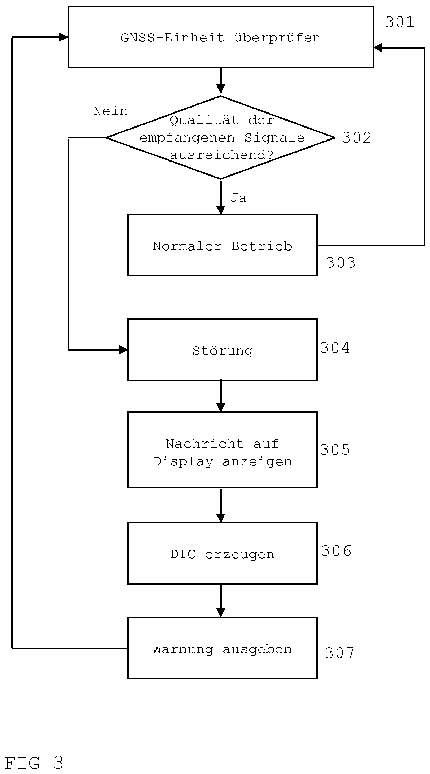

Ein entsprechendes Verfahren ist beispielhaft in Figur 3 dargestellt. Dabei wird die Tachografeneinheit 11, wie beispielsweise eine GNSS-Einheit 112, auf ihre Funktion überprüft (Schritt 301). Bei der Überprüfung kann beispielsweise die Signalqualität überprüft werden (Schritt 302). Ist die Signalqualität der empfangenen Signale ausreichend und werden genug Signale empfangen um eine Positionsbestimmung zu ermöglichen, kann die GNSS-Einheit 112 im normalen Betrieb betrieben werden (Schritt 303) und das Verfahren beginnt erneut mit Schritt 301. Sind die empfangenen Signale zu schwach oder werden zu wenig Signale empfangen um eine Positionsbestimmung zu ermöglichen, kann dies als Störung interpretiert werden. Optional können dabei noch die oben beschriebenen zusätzlichen Parameter in die Bestimmung mit einbezogen werden, ob eine Störung vorliegt (z.B. Dauer der Unterbrechung, Kartendaten, etc.).

Wird eine Störung erkannt (Schritt 304), kann diese dem Fahrer beispielsweise auf einem Display des Tachografen 10 angezeigt werden (Schritt 305). Dadurch wird der Fahrer über die detektierte Störung informiert und er kann entsprechend die Störung beheben oder manuelle Einträge im Tachograf 10 vornehmen.

Zusätzlich oder alternativ kann beispielsweise auch ein so genannter Diagnostic Trouble Code (DTC) erzeugt werden (Schritt 306). Ein DTC ist im Automobilbereich im Allgemeinen eine hexadezimale Kennziffer zur Identifikation von Fehlfunktionen. Der DTC kann beispielsweise in einem Fehlerspeicher im Fahrzeug abgelegt werden, so dass zu einem späteren Zeitpunkt erkennbar ist, zu welchem Zeitpunkt die Störung vorgelegen hat. Der Fehlerspeicher kann beispielsweise in einer Werkstatt mittels eines entsprechenden Auslesegerätes ausgelesen werden. Andere Steuergeräte des Fahrzeugs können ebenfalls auf den Fehlerspeicher zugreifen und sind somit über die Fehlfunktion der GNSS-Einheit 112 informiert. Die Störung kann beispielsweise auch als Warnung ausgegeben werden (Schritt 307) . Beispielsweise kann die Störung als Fehlerbotschaft auf einem elektronischen Fahrzeugdatenbus (z.B. CAN, Controller Area Network) für andere Steuergeräte des Fahrzeuges bereitgestellt werden.

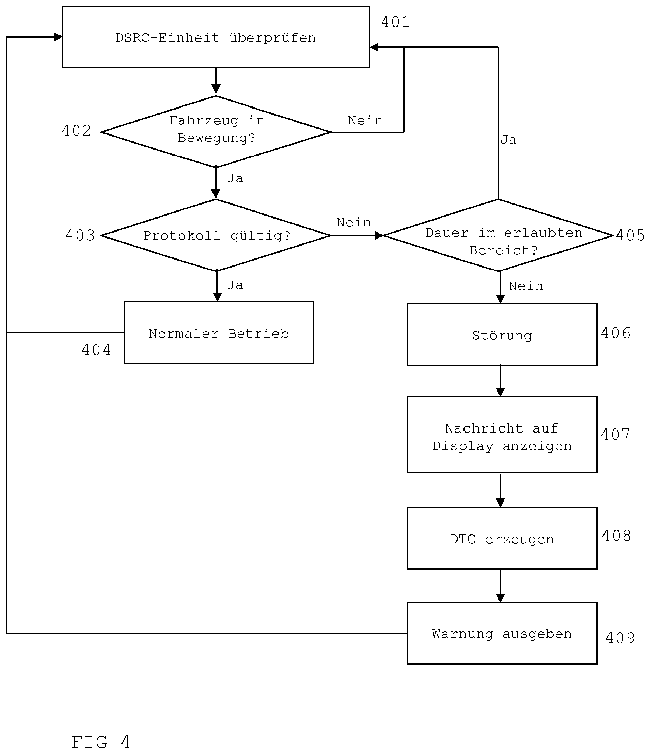

Für andere Tachografeneinheiten 11 kann eine Detektion von Störungen auf ähnliche Art und Weise erfolgen. In Figur 4 ist beispielhaft ein Verfahren dargestellt, mit welchem eine Störung einer DSRC-Einheit 111 festgestellt werden kann. Dabei kann auch hier wieder die Funktion der DSRC-Einheit überprüft werden (Schritt 401) . Dabei kann beispielsweise wieder bestimmt werden, ob sich das Fahrzeug in Bewegung befindet (Schritt 402) . Wie oben bereits erläutert, kann es vorkommen, dass sich das Fahrzeug beispielsweise aufgrund eines Staus für längere Zeit im Bereich einer elektronischen Mautstation befindet. In einem solchen Fall empfängt die DSRC-Einheit 111 für einen längeren Zeitraum Signale. Eine DSRC-Einheit 111 empfängt jedoch im Normalfall nur für einen kurzen Zeitraum Signale, nämlich dann, wenn Daten ausgelesen werden sollen. Wird erkannt, dass die Funktion der DSRC-Einheit 111 fehlerhaft ist, beispielsweise, dass über einen längeren Zeitraum Signale empfangen werden, befindet sich das Fahrzeug jedoch nicht in Bewegung oder ist die aktuelle Geschwindigkeit geringer als eine Minimalgeschwindigkeit, dann kann die fehlerhafte Funktion beispielsweise nicht als Störung erkannt werden. Das Verfahren beginnt dann erneut mit Schritt 401.

Befindet sich das Fahrzeug jedoch in Bewegung, bzw. bewegt es sich schneller als eine vorgegebene Minimalgeschwindigkeit, dann kann möglicherweise eine Störung vorliegen. In einem weiteren Schritt kann dann beispielsweise noch überprüft werden, ob das Protokoll der empfangenen Signale ein gültiges Protokoll ist (Schritt 403) . Signale, welche eine DSRC-Einheit 111 von einer Ausleseeinheit 201 empfängt entsprechen in der Regel einem bestimmten Standard. Signale elektronischer Mautstationen oder anderer externer Geräte wie beispielsweise WLAN-Access Points, entsprechen jedoch meist einem unterschiedlichen Standard. Entspricht das Kommunikationsprotokoll der empfangenen Signale dem vorgegebenen Standard, kann die DSRC-Einheit 111 im normalen Betrieb betrieben werden (Schritt 404) und das Verfahren kann mit Schritt 401 erneut beginnen.

Entspricht das Kommunikationsprotokoll der empfangenen Signale jedoch nicht dem vorgegebenen Standard, dann kann weiterhin die Dauer bestimmt werden, wie lange die Signale empfangen werden (Schritt 405). Überschreitet die Dauer des Empfangs der Signale einen Schwellwert nicht, dann kann das Verfahren wieder mit Schritt 401 von vorne beginnen. Überschreitet die Dauer jedoch einen vorgegebenen Schwellwert, kann dies als Störung detektiert werden (Schritt 406). Auch bei Stau befindet sich ein Fahrzeug in der Regel nur für einen begrenzen Zeitraum in der Nähe einer elektronischen Mautstation. Meist bewegen sich Fahrzeuge in einem Stau zumindest in regelmäßigen Abständen wenigstens weniger Meter weiter. Die DSRC-Einheit 111 befindet sich daher auch im Stau meist nur für eine begrenzte Zeit in der Nähe einer elektronischen Mautstelle. Die Reichweite der von einer elektronischen Mautstelle ausgesendeten Signale ist dabei meist auch begrenzt. Die Signale können daher nur in einem begrenzten Bereich um die Mautstelle herum empfangen werden.

Beispielsweise kann eine Störung erkannt werden, wenn Signale für mehr als 30 Sekunden, für mehr als 60 Sekunden oder für mehr als 3 Minuten empfangen werden. Dies sind jedoch lediglich Beispiele. Die Grenze, ab wann der Empfang von Signalen als Störung erkannt wird, kann grundsätzlich beliebig gewählt werden. Eine Kommunikation mit einer Ausleseeinheit 201 sollte jedoch möglichst nicht als Störung erkannt werden und auch andere Situationen, in welchen zumindest für einen begrenzten Zeitraum Signale empfangen werden sollten zuverlässig nicht als Störung erkannt werden. Daher sollte die Grenze in der Regel nicht zu kurz gewählt werden.

Wird eine Störung erkannt (Schritt 406), kann diese dem Fahrer beispielsweise auf einem Display des Tachografen 10 angezeigt werden (Schritt 407). Dadurch wird der Fahrer über die detektierte Störung informiert und er kann entsprechend die Störung beheben oder manuelle Einträge im Tachograf 10 vornehmen. Zusätzlich kann beispielsweise auch ein so genannter Diagnostic Trouble Code (DTC) erzeugt werden (Schritt 408) . Ein DTC ist im Automobilbereich im Allgemeinen eine hexadezimale Kennziffer zur Identifikation von Fehlfunktionen. Der DTC kann beispielsweise in einem Fehlerspeicher im Fahrzeug abgelegt werden, so dass zu einem späteren Zeitpunkt erkennbar ist, zu welchem Zeitpunkt die Störung vorgelegen hat. Der Fehlerspeicher kann beispielsweise in einer Werkstatt mittels eines entsprechenden Auslesegerätes ausgelesen werden. Andere Steuergeräte des Fahrzeugs können ebenfalls auf den Fehlerspeicher zugreifen und sind somit über die Fehlfunktion der GNSS-Einheit 112 informiert. Die Störung kann beispielsweise auch als Warnung ausgegeben werden (Schritt 409). Beispielsweise kann die Störung als Fehlerbotschaft auf einem elektronischen Fahrzeugdatenbus (z.B. CAN, Controller Area Network) für andere Steuergeräte des Fahrzeuges bereitgestellt werden.

Wie an den in den Figuren 3 und 4 beispielhaft dargestellten Verfahren zu erkennen ist, kann grundsätzlich zwischen zwei verschiedenen Arten von Störung unterschieden werden. Im Falle einer DSRC-Einheit 111 wird beispielsweise eine Störung erkannt, wenn ungewünschte Signale empfangen werden. Im Falle einer GNSS-Einheit 112 hingegen wird eine Störung erkannt, wenn die gewünschten Signale nicht, oder nicht mit ausreichender Empfangsfeldstärke empfangen werden.

Die in Bezug auf die Figuren 3 und 4 erläuterten Verfahren sind dabei lediglich Beispiele. Beispielsweise ist die Anzeige einer Störung auf einem Display optional. Der Fahrer kann auf beliebige Art und Weise über die Störung informiert werden. So kann ein erzeugtes Warnsignal beispielsweise ein visuelles, akustisches oder haptisches Signal aufweisen. Beispielsweise kann ein Warnton, eine Folge von Warntönen oder eine entsprechende Warnmeldung erzeugt werden. Beispielsweise ist es auch möglich, dass eine Lampe am Tachograf 10 oder im Fahrzeug aufleuchtet und so den Fahrer über die Störung informiert. Eine Anzeige kann wie oben beschrieben auf einem Display des Tachografen 10 erfolgen, aber auch auf einem anderen im Fahrzeug vorhandenen Display, wie beispielsweise dem Display eines Navigationsgerätes oder eines Head-up-Displays. Ebenfalls wäre es möglich, dass eine entsprechende Nachricht an ein Mobiltelefon des Fahrers gesendet wird und dieses eine entsprechende visuelle, akustische und/oder haptische Warnung erzeugt. Beispielsweise kann das Mobiltelefon des Fahrers vibrieren. Ebenso wäre es möglich, dass das Lenkrad vibriert um den Fahrer über die Störung zu informieren. Der Fahrer kann jedoch auch alternativ oder zusätzlich auf jegliche andere Art und Weise über die Störung informiert werden.

Wird der Fahrer über die Störung informiert, kann er beispielsweise die Störquelle entfernen oder eine manuelle Eingabe im Tachografen 10 vornehmen. Ist dem Fahrer bekannt, welche Störquelle die Störung hervorruft, kann er diese beispielsweise ausschalten (z.B. WLAN-Access Point) oder das Fahrzeug, wenn möglich, von der Störquelle entfernen. Der Fahrer kann beispielsweise auch die Warnung abschalten, wenn er erkennt, dass keine Störung vorliegt und diese fälschlicherweise erkannt wurde. Befindet sich der Fahrer beispielsweise für einen längeren Zeitraum wegen eines Staus in einem Tunnel und der Tachograf 10 erzeugt eine Warnung da für eine bestimmte Zeit kein Satellitensignal empfangen wurde, kann der Fahrer die Warnmeldung abschalten, da tatsächlich keine Störung im eigentlichen Sinne vorliegt. Der Fahrer kann beispielsweise auch Eingaben im Tachograf 10 vornehmen, beispielsweise kann er entsprechende Informationen im Tachograf ablegen, dass er sich in einem Stau befunden hat.

Es ist jedoch auch möglich, dass der Fahrer selbst gar nicht über die Störung informiert wird. Alternativ oder zusätzlich kann die Störung im Tachograf und/oder im Fahrzeug abgelegt werden und/oder es kann beispielsweise anderen Steuergeräten eine Information über die Störung bereitgestellt werden. Wird beispielsweise, wie oben beschrieben, ein DTC erzeugt und in einem Fehlerspeicher abgelegt, kann später die Störung nachvollzogen werden. Werden beim Auslesen der Daten aus dem Tachograf 10 Unregelmäßigkeiten festgestellt, kann beispielsweise der Fehlerspeicher ausgelesen werden, um so Hinweise auf eine vorangegangene Störung zu erhalten.

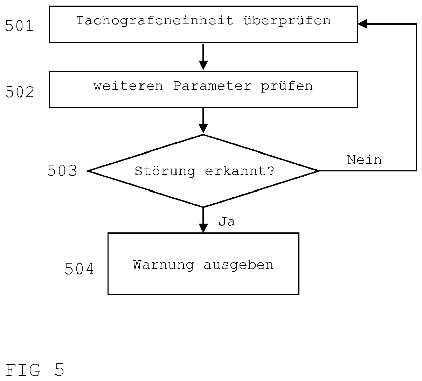

Figur 5 zeigt beispielhaft ganz allgemein ein Verfahren zum Betreiben einer Tachografenanordnung. Dabei kann zunächst eine Tachografeneinheit 11 des Tachografen 10 überprüft werden (Schritt 501). Das Überprüfen der Tachografeneinheit 11 umfasst das Detektieren, ob mittels der Tachografeneinheit 11 Signale empfangen werden. Das Verfahren weist weiterhin das Überprüfen wenigstens eines Parameters im Zusammenhang mit den empfangenen Signalen auf (Schritt 502). Der wenigstens eine Parameter im Zusammenhang mit den empfangenen Signalen kann beispielsweise eine Dauer betreffen, für welche die Signale empfangen werden, oder eine Dauer für welche keine Signale empfangen werden, oder eine Dauer für welche die Empfangsfeldstärke der empfangenen Signale einen vorgegebenen Schwellwert nicht überschreitet. Der wenigstens eine Parameter kann alternativ oder zusätzlich eine Position eines Fahrzeugs betreffen in welchem der Tachograf 10 angeordnet ist. Wird anhand der empfangenen, bzw. nicht empfangenen Signale und dem wenigstens einen Parameter keine Störung erkannt (Schritt 503), beginnt das Verfahren mit Schritt 501 von vorne. Wird jedoch eine Störung erkannt, wird eine Warnung ausgegeben (Schritt 504) . Die Warnung kann, wie oben beschrieben, als Warnung für den Fahrer (visuell, akustisch oder haptisch) und/oder als Warnung im Fahrzeug (z.B. DTC) ausgegeben werden. Eine Störung kann entweder dann erkannt werden, wenn die Tachografeneinheit 11 Signale empfängt und der wenigstens eine Parameter vorgegebene Voraussetzungen erfüllt, oder wenn die Tachografeneinheit 11 keine Signale empfängt oder die Empfangsfeldstärken der empfangenen Signale einen vorgegebenen Schwellwert unterschreiten und der wenigstens eine Parameter vorgegebene Voraussetzungen erfüllt. Wann eine Störung erkannt wird hängt dabei davon ab, um was für eine Tachografeneinheit (z.B. DSRC-Einheit 111 oder GNSS-Einheit 112) es sich handelt, bzw. ob der Empfang von Signalen mit der entsprechenden Tachografeneinheit 11 gewünscht ist oder nicht.

Die Erfindung wurde anhand einer Tachografenanordnung beschrieben. Grundsätzlich ist es jedoch auch möglich, andere Anordnungen auf die selbe Art und Weise auf Störungen zu prüfen. Beispielsweise kann nicht nur eine DSRC-Einheit durch eine elektronische Mautstelle gestört werden. Es ist ebenso möglich, dass anders herum die Funktion eines entsprechenden Mautgerätes im Fahrzeug durch eine DSRC-Einheit oder eine andere Einheit gestört wird. So könnte auch ein Mautgerät im Fahrzeug darauf überprüft werden, ob Signale empfangen werden. Auch in diesem Fall könnte der Empfang von Signalen für einen längeren Zeitraum als Störung angesehen werden, da grundsätzlich nur für sehr kurze Zeiträume von einem Mautgerät Signale empfangen werden, nämlich dann wenn diese eine elektronische Mautstelle passiert.

## Patentansprüche

1. Anordnung mit einem Tachografen (10) und einer Ausleseeinheit (201), wobei
der Tachograf (10) eine Tachografeneinheit (11), die eine DSRC-Einheit (111) ist, aufweist, die dazu ausgebildet ist, eine drahtlose Verbindung zu der Ausleseeinheit (201) herzustellen, Anfragesignale von der Ausleseeinheit (201) zu empfangen und Daten an die Ausleseeinheit (201) zu übertragen;
der Tachograf (10) eine Kontrolleinheit (12) aufweist, die dazu ausgebildet ist
zu detektieren, ob mittels der DSRC-Einheit (111) Signale empfangen werden;
Parameter im Zusammenhang mit den empfangenen Signalen zu überprüfen;
eine Störung in einer Funktion des Tachografen (10) durch Störquellen zu erkennen; und
eine Warnung auszugeben, wenn eine Störung in der Funktion des Tachografen (10) durch Störquellen erkannt wurde, wobei eine Störung in der Funktion des Tachografen (10) durch Störquellen erkannt wird,
wenn die DSRC-Einheit (111) Signale empfängt und die Parameter vorgegebene Voraussetzungen erfüllen;
wobei die Parameter wenigstens aufweisen:
eine Dauer, für die die Signale empfangen werden; und
a. eine aktuelle oder vergangene Position eines Fahrzeugs, in welchem der Tachograf (10) angeordnet ist; und/oder
b. die Art eines Kommunikationsprotokolls der empfangenen Signale; und/oder
c. eine Information darüber, ob sich das Fahrzeug, in welchem der Tachograf angeordnet ist, in Bewegung befindet; und/oder
d. eine Information darüber, ob sich das Fahrzeug, in welchem der Tachograf angeordnet ist, schneller als eine vorgegebene Minimalgeschwindigkeit bewegt.

2. Anordnung nach Anspruch 1, wobei die Parameter aufweisen:
eine Dauer, für die keine Signale empfangen werden.

3. Anordnung nach Anspruch 1 oder 2, wobei eine Störung in der Funktion des Tachografen (10) durch Störquellen detektiert wird, wenn sich das Fahrzeug ,in welchem der Tachograf (10) angeordnet ist, in Bewegung befindet und die DSRC-Einheit (111) für eine Dauer Signale empfängt, welche länger ist als eine Minimaldauer.

4. Anordnung nach Anspruch 3, wobei die Minimaldauer 30 Sekunden, 60 Sekunden oder 3 Minuten beträgt.

5. Verfahren zum Betreiben eines Tachografen (10) mit einer Tachografeneinheit (11), wobei das Verfahren aufweist
Detektieren, ob mittels der Tachografeneinheit (11), die eine DSRC-Einheit (111) ist, Signale von einer Ausleseeinheit (201) empfangen werden;
Überprüfen von Parametern im Zusammenhang mit den empfangenen Signalen;
Erkennen einer Störung in einer Funktion des Tachografen (10) durch Störquellen; und
Ausgeben einer Warnung, wenn eine Störung in der Funktion des Tachografen (10) durch Störquellen erkannt wurde, wobei eine Störung in der Funktion des Tachografen (10) durch Störquellen erkannt wird,
wenn die DSRC-Einheit (111) Signale empfängt und die Parameter vorgegebene Voraussetzungen erfüllen;
wobei die Parameter wenigstens aufweisen:
eine Dauer, für die die Signale empfangen werden;
und
a. eine aktuelle oder vergangene Position eines Fahrzeugs in welchem der Tachograf (10) angeordnet ist; und/oder
b. die Art eines Kommunikationsprotokolls der empfangenen Signale; und/oder
c. eine Information darüber, ob sich das Fahrzeug, in welchem der Tachograf (10) angeordnet ist, in Bewegung befindet; und/oder
d. eine Information darüber, ob sich das Fahrzeug, in welchem der Tachograf (10) angeordnet, ist schneller als eine vorgegebene Minimalgeschwindigkeit bewegt.

6. Verfahren nach Anspruch 5, wobei das Ausgeben einer Warnung wenigstens eines aufweist von
Erzeugen einer visuellen Warnung;
Erzeugen einer akustischen Warnung;
Erzeugen einer haptischen Warnung;
Erzeugen eines Diagnostic Trouble Code (DTC); und
Bereitstellen der Warnung auf einem elektronischen Fahrzeugdatenbus.

7. Fahrzeug mit einem Tachografen (10) nach Anspruch 1.

## Claims

1. Arrangement having a tachograph (10) and a reading unit (201), wherein the tachograph (10) comprises a tachograph unit (11), which is a DSRC unit (111), that is designed to make a wireless connection to the reading unit (201), to receive request signals from the reading unit (201) and to transmit data to the reading unit (201);
the tachograph (10) comprises a monitoring unit (12) that is designed to detect whether signals are received by means of the DSRC unit (111);
to check parameters relating to the received signals;
to detect a malfunction in operation of the tachograph (10) as a result of interference sources; and
to output a warning if a malfunction in the operation of the tachograph (10) as a result of interference sources has been detected, a malfunction in the operation of the tachograph (10) as a result of interference sources being detected if the DSRC unit (111) receives signals and the parameters meet predefined prerequisites;
wherein the parameters comprise at least:
a period for which the signals are received; and
a. a present or past position of a vehicle in which the tachograph (10) is arranged; and/or;
b. the type of a communication protocol of the received signals; and/or
c. information about whether the vehicle in which the tachograph is arranged is in motion; and/or
d. information about whether the vehicle in which the tachograph is arranged is moving faster than a predefined minimum velocity.

2. Arrangement according to Claim 1, wherein the parameters comprise:
a period for which no signals are received.

3. Arrangement according to Claim 1 or 2, wherein a malfunction in the operation of the tachograph (10) as a result of interference sources is detected if the vehicle in which the tachograph (10) is arranged is in motion and the DSRC unit (111) receives signals for a period that is longer than a minimum period.

4. Arrangement according to Claim 3, wherein the minimum period is 30 seconds, 60 seconds or 3 minutes.

5. Method for operating a tachograph (10) having a tachograph unit (11), wherein the method comprises
detecting whether signals are received from a reading unit (201) by means of the tachograph unit (11), which is a DSRC unit (111);
checking parameters relating to the received signals;
detecting a malfunction in operation of the tachograph (10) as a result of interference sources; and
outputting a warning if a malfunction in the operation of the tachograph (10) as a result of interference sources has been detected, a malfunction in the operation of the tachograph (10) as a result of interference sources being detected if the DSRC unit (111) receives signals and the parameters meet predefined prerequisites;
wherein the parameters comprise at least:
a period for which the signals are received; and
a. a present or past position of a vehicle in which the tachograph (10) is arranged; and/or;
b. the type of a communication protocol of the received signals; and/or
c. information about whether the vehicle in which the tachograph (10) is arranged is in motion; and/or
d. information about whether the vehicle in which the tachograph (10) is arranged is moving faster than a predefined minimum velocity.

6. Method according to Claim 5, wherein the outputting of a warning comprises at least one from
producing a visual warning;
producing an audible warning;
producing a haptic warning;
producing a Diagnostic Trouble Code (DTC); and
providing the warning on an electronic vehicle data bus.

7. Vehicle having a tachograph (10) according to Claim 1.

## Revendications

1. Ensemble comprenant un tachygraphe (10) et une unité de lecture (201),
le tachygraphe (10) comportant une unité tachygraphique (11) qui est une unité DSRC (111) qui est conçue pour établir une liaison sans fil avec l'unité de lecture (201), pour recevoir des signaux de requête de l'unité de lecture (201) et pour transmettre des données à l'unité de lecture (201) ;
le tachygraphe (10) comportant une unité de commande (12) qui est conçue pour détecter si des signaux sont reçus par l'unité DSRC (111) ;
vérifier les paramètres en liaison avec les signaux reçus ;
détecter un dysfonctionnement du tachygraphe (10) dû à des sources d'interférences ; et
émettre un avertissement si un dysfonctionnement du tachygraphe (10) dû à des sources d'interférences a été détecté, un dysfonctionnement du tachygraphe (10) dû à des sources d'interférences ayant été détecté lorsque l'unité DSRC (111) reçoit des signaux et que les paramètres répondent à des exigences spécifiées ; les paramètres comportant au moins :
une durée pendant laquelle les signaux sont reçus ;
et
a. une position actuelle ou passée d'un véhicule dans lequel le tachygraphe (10) est disposé ; et/ou
b. le type de protocole de communication des signaux reçus ; et/ou
c. une information indiquant si le véhicule dans lequel le tachygraphe est disposé se déplace ; et/ou
d. une information indiquant si le véhicule dans lequel le tachygraphe est disposé se déplace à une vitesse supérieure à une vitesse minimale spécifiée.

2. Ensemble selon la revendication 1, les paramètres comportant:
une durée pendant laquelle aucun signal n'est reçu.

3. Ensemble selon la revendication 1 ou 2, un dysfonctionnement du tachygraphe (10) dû à des sources d'interférences étant détecté lorsque le véhicule dans lequel le tachygraphe (10) est disposé est en mouvement et que l'unité DSRC (111) reçoit des signaux pendant une durée supérieure à une durée minimale.

4. Ensemble selon la revendication 3, la durée minimale étant de 30 secondes, 60 secondes ou 3 minutes.

5. Procédé de fonctionnement d'un tachygraphe (10) comprenant une unité tachygraphique (11), le procédé comprenant les étapes suivantes
détecter si des signaux sont reçus d'une unité de lecture (201) au moyen de l'unité tachygraphique (11) qui est une unité DSRC (111) ;
vérifier des paramètres en liaison avec les signaux reçus ;
détecter un dysfonctionnement du tachygraphe (10) dû à des sources d'interférences ; et
émettre un avertissement si un dysfonctionnement du tachygraphe (10) dû à des sources d'interférences a été détecté, un dysfonctionnement du tachygraphe (10) dû à des sources d'interférences ayant été détecté lorsque l'unité DSRC (111) reçoit des signaux et que les paramètres répondent à des exigences spécifiées ; les paramètres comportant au moins :
une durée pendant laquelle les signaux sont reçus ;
et
a. une position actuelle ou passée d'un véhicule dans lequel le tachygraphe (10) est disposé ; et/ou
b. le type de protocole de communication des signaux reçus ; et/ou
c. une information indiquant si le véhicule dans lequel le tachygraphe (10) est disposé est en mouvement ; et/ou
d. une information indiquant si le véhicule dans lequel le tachygraphe (10) est disposé se déplace à une vitesse supérieure à une vitesse minimale spécifiée.

6. Procédé selon la revendication 5, l'émission d'un avertissement comprenant l'une au moins des étapes suivantes
générer un avertissement visuel ;
générer un avertissement sonore ;
générer un avertissement haptique ;
générer un code de problème de diagnostic (DTC) ; et
fournir l'avertissement sur un bus de données de véhicule électroniques.

7. Véhicule équipé d'un tachygraphe (10) selon la revendication 1.
